# EUROPEAN PATENT SPECIFICATION

(11) **EP 2 555 498 B1**
(45) Date of publication and mention of the grant of the patent: **24.12.2014**
(21) Application number: 10850976.1
(22) Date of filing: 20.07.2010
(51) Int. Cl.: H04M 1/725, G06F 17/30

(54) **MULTIMEDIA MESSAGE SAVING METHOD AND MOBILE TERMINAL**
MULTIMEDIA-NACHRICHTENSPEICHERVERFAHREN UND MOBILES ENDGERÄT
PROCÉDÉ DE SAUVEGARDE DE MESSAGE MULTIMÉDIA ET TERMINAL MOBILE

(30) Priority: 05.05.2010 CN 201010168822
(43) Date of publication of application: 06.02.2013
(73) Proprietor: ZTE Corporation, Shenzhen, Guangdong 518057 (CN)
(72) Inventor: CAO, Gang, Shenzhen Guangdong 518057 (CN)
(74) Representative: Tischner, Oliver
(86) International application number: PCT/CN2010/075302
(87) International publication number: WO 2011/137607

(56) References cited:
- EP-A1- 1 708 522
- CN-A- 1 697 540
- CN-A- 101 610 459
- CN-A- 101 662 476
- US-A1- 2006 173 911
- US-A1- 2009 156 250

## Description

The disclosure relates to the field of communication of the mobile terminals, in particular to a Multimedia Message (MM) saving method and a mobile terminal.

### BACKGROUND

The Multimedia Messaging Service (MMS) is the one developed with the highest standard among the existing short messaging service technology, and is most characterized by supporting a multimedia function, it transmits video clip, picture, voice and text between mobile terminals as well as between a mobile terminal and a computer by adopting high speed transmission technology (i.e. the Enhanced Data Rate For GSM Evolution (EDGE)) and the General Packet Radio Service (GPRS) technology, with the Wireless Application Protocol (WAP) as a carrier.

At present, the widely used MMS is the mobile news service, which is a value added service operated through cooperation between the mobile operator and domestic mainstream media, so as to provide timely information service for a client, such as current affairs, weather forecast, health guide or financial information, with the MMS as the primary browsing way and the WAP as the secondary browsing way. The client can view the abovementioned information at any time through the browsing function of the MMS. However, there are always the following problems when a user uses the mobile news: since the mobile news has abundant information and a large amount of data, when a user wants to save a Multimedia Message (MM) page of the mobile news he/she is interested in, he/she has to save all MM pages and cannot only save an certain MM page in the mobile news; and common MMS also has such problems.

US 2006/0173911 A1 discloses a method and apparatus for the delivery, administration and application of themes to a cellular telephone device. The apparatus, in one embodiment, comprises an inbox to receive a multimedia message (MM) containing a theme, a filing logic to place the MM in a themes folder, a themes folder available to the user to browse the theme MMs, and a client-side application to apply the theme to the user's cellular telephone device. In one embodiment, the apparatus includes notification logic to notify a web page associated with the user to change its display to match the theme applied by the user to the cellular telephone device.

EP 1708522 A1 discloses a theme change system (100) includes a portable communication device (103a); and a server apparatus (101), wherein the portable communication device (1 03a) and the server apparatus (101) are connected to each other via a communication network (106). The portable communication device (1 03a) includes a theme request section making a request for theme data related to an interface between a user and a process execution part for performing processing in accordance with a request from the user to the server apparatus (101), a theme management section determining permission and non-permission about the reception of the theme data requested by the theme request section and storing, in a storage section, the theme data, and an interface output section outputting the interface on the basis of the theme data when the process execution part is started or while the process execution part is being started. The server apparatus (101) includes a transmission section transmitting theme data to the portable communication device (103a).

US 2009/0156250 A1 discloses an apparatus and method for changing a theme of a website automatically. A mobile device includes a processor and a memory. The memory contains an application for detecting the selection of a theme and automatically changing a theme of a website to the selected theme. Information related to the selected theme may be transferred to the website using a wireless protocol such as MMS, WAP, etc. The website may be a blog site, a social network site, or a personal website. The selected theme may include information related to music, alerts, wallpaper, text, videos, pictures, or virtual card file (VCF) information.

### SUMMARY

The main objective of the disclosure is to provide an Multimedia Message (MM) saving method and a mobile terminal, to enable a user of saving an MM page which he/she is interested in by classification.

The features of the method and system according to the present invention are defined in the independent claims, and the preferable features according to the present invention are defined in the dependent claims.

In the MM saving method and the mobile terminal, by extracting the target MM page, a mobile terminal user does not need to save all the MM pages of the MM, but can save an MM page he/she likes by classification in the limited storage space of the mobile terminal, and recombine them into a new MM.

### BRIEF DESCRIPTION OF THE DRAWINGS

Fig. 1 is a flowchart of an MM saving method according to an embodiment of the disclosure;
Fig. 2 is a diagram showing the structure of a mobile terminal according to an embodiment of the disclosure;
Fig. 3 is a diagram showing the structure of an MM page convergence module of a mobile terminal according to an embodiment of the disclosure.

### DETAILED DESCRIPTION

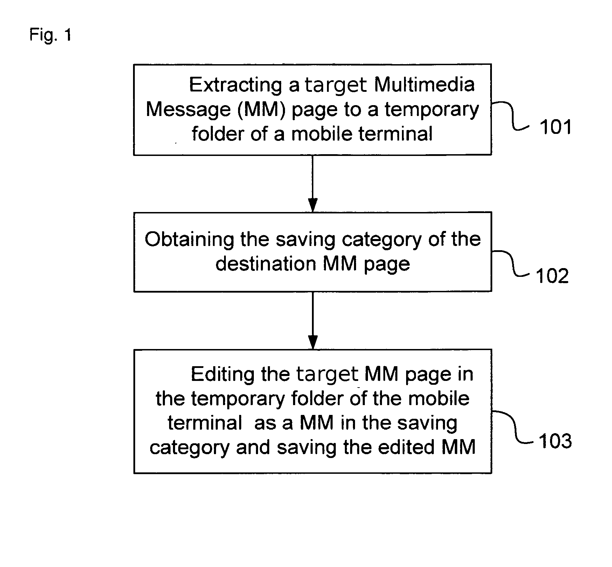

Fig. 1 is a flowchart of an MM saving method according to an embodiment of the disclosure, as shown in Fig. 1, the method includes:
Step S101: extracting a target MM page to a temporary folder of the mobile terminal,
   which includes:
   firstly, selecting the target MM page; then, detecting whether the temporary folder of the mobile terminal used for saving the target MM page is empty, and clearing the temporary folder when the temporary folder is not empty; and finally, copying the target MM page to the temporary folder of the mobile terminal.
   a piece of mobile news received by the mobile terminal user generally includes abundant contents, such as sports, current affairs and weather forecast, and consists of multiple MM pages; if the mobile terminal user wants to only save the contents he/she is interested in, such as sports, when browsing the mobile news, he/she may make a copy in the MM page where the sports contents are located and extracts the MM page to the temporary folder of the mobile terminal. Before the MM page is extracted, the mobile terminal will detect whether the temporary folder of the mobile terminal is empty, when the temporary folder is not empty, the temporary folder of the mobile terminal is cleared so that the target MM page can be saved. Meanwhile, the parameters including the corresponding paths of the resource files, such as video, text and/or picture, in the target MM page in the temporary folder of the mobile terminal, and the playing time of the MM page, are extracted to a temporary area to be used in step S103.
Step S102: obtaining the saving category of the target MM page; which includes:
   at first, traversing the MMs existed in the mobile terminal to obtain the saving categories of the MMs existed; then, displaying all the saving categories to the mobile terminal user in a list form and prompting the mobile terminal user to select or create a saving category; and finally, recording the saving category selected or created by the mobile terminal user.
      After extracting the target MM page, the mobile terminal traverses the MMs originally saved by the mobile terminal user; the existed MMs are saved in the file system of the mobile terminal by classification, such as sports, current affairs and/or weather forecast; the saving categories are generally the title contents of various MMs and are saved in the fields of the MMs as MM headers; the MM headers of the MMs are analyzed and all the saving categories of the existed MMs are obtained; and all the saving categories are displayed to the mobile terminal user in a list form to prompt the mobile terminal user to select or create a saving category. After the selection or creation of the mobile terminal user, the mobile terminal records the saving category selected or created by the mobile terminal user.
Step S103: editing the target MM page in the temporary folder of the mobile terminal as a MM in the saving category and saving the edited MM, which includes:
   when the saving category is an existing saving category, recoding the target MM page in the temporary folder of the mobile terminal and a MM in a selected saving category as a new MM; or
   when the saving category is a new saving category, establishing the target MM page in the temporary folder of the mobile terminal as a MM in the new saving category.

When the mobile terminal user selects an existing saving category, the mobile terminal recodes the target MM page in the temporary folder of the mobile terminal and the MM in the selected saving category as a new MM and saves the new MM to the file system of the mobile terminal, which actually includes the following three steps:
A: extracting the parameters including the corresponding paths of the resource files and the playing time of the MM in the saving category selected by the mobile terminal user from the file system of the mobile terminal into a temporary list.
B: inserting the parameters including the corresponding paths of the resource files of the target MM page and the playing time of the MM page extracted in S101 into the temporary list to be behind the data saved in step A.
C: recoding, according to the parameters including the paths of the resource files and the playing time in the upgraded temporary list, the target MM page data in the temporary folder of the mobile terminal and the originally existed MM data in the saving category selected by the mobile terminal user according to the parameters including the paths of the resource files and the playing time in the upgraded temporary list, and then saving the recoded MM into the file system of the mobile terminal.

The abovementioned process is called the edition of the MM to generate a new MM; the saving category selected by the mobile terminal user is the MM header of the new MM and is generally identified by the title of the MM so as to complete the convergence of the MM page. If the saving category required by the mobile terminal user does not exist in the existed saving categories, for example, the title contents of the MM page that the mobile terminal user needs to save is entertainment, but only sports, current affairs and weather forecast are in the existing saving categories of the MMs of the mobile terminal, the mobile terminal user may create an entertainment saving category; when the mobile terminal user creates a saving category, the target MM page in the temporary folder of the mobile terminal is established as a MM of a new category and is saved to the file system of the mobile terminal; and the new saving category is taken as the MM header of the MM to complete the convergence of the MM page.

By adopting the MM saving method, a mobile terminal user can only save the MM page he/she likes by classification in the limited storage space of the mobile terminal.

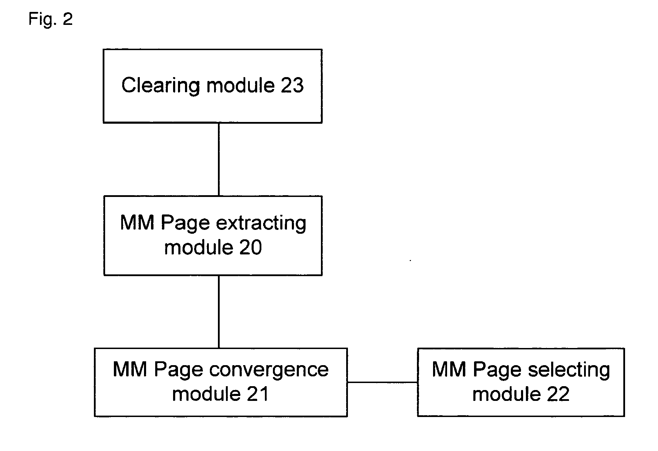

Fig. 2 is a diagram showing the composition structure of a mobile terminal according to an embodiment of the disclosure, as shown in Fig. 2, and the mobile terminal at least includes:
an MM page extracting module 20, configured to extract a target MM page to a temporary folder of the mobile terminal;
an MM page selecting module 22, configured to obtain a saving category of the target MM page; and
an MM page convergence module 21, configured to edit the target MM page in the temporary folder of the mobile terminal as a MM in the saving category and to save the edited MM.

The mobile terminal further includes a clearing module 23, configured to clear the temporary folder of the mobile terminal when the temporary folder of the mobile terminal is not empty, before the MM page extracting module 20 extracts the target MM page to the temporary folder of the mobile terminal.

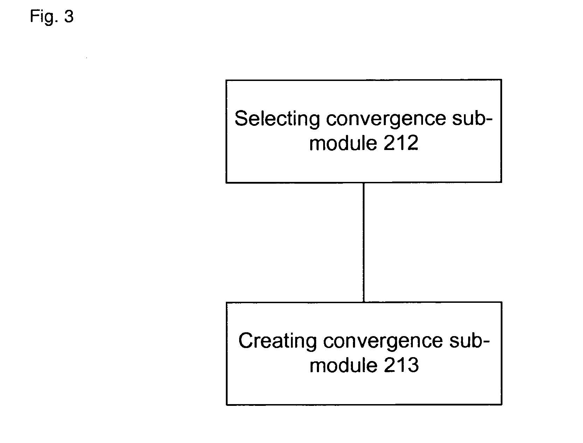

Fig. 3 is a diagram showing the composition structure of an MM page convergence module 21 according to an embodiment of the disclosure, as shown in Fig. 3, and the MM page convergence module 21 mainly includes:
a selecting convergence sub-module 212, configured to recode the target MM page in the temporary folder of the mobile terminal and a MM in a selected saving category as a new MM, when the saving category is an existing saving category; or
a creating convergence sub-module 213, configured to establish the target MM page in the temporary folder of the mobile terminal as a MM in the new saving category, when the saving category is a new saving category.
a piece of mobile news received by the mobile terminal user generally includes abundant contents, such as sports, current affairs and weather forecast, and consists of multiple MM pages; if the mobile terminal user wants to only save the contents he/she is interested in, such as sports, when browsing the mobile news, he/she may make a copy in the MM page where the sports contents are located, at the moment, the MM page extracting module 20 of the mobile terminal extracts the MM page to the temporary folder of the mobile terminal. Before the MM page is extracted, the clearing module 23 will detect whether the temporary folder of the mobile terminal is empty, when the temporary folder is not empty, the clearing module 23 clears the temporary folder of the mobile terminal in order to save the target MM page. Meanwhile, the parameters including the corresponding paths of the resource files, such as video, text and/or picture, in the target MM page in the temporary folder of the mobile terminal, and the playing time of the MM page, are extracted to a temporary area to be used by the MM page convergence module 21.

After the MM page extracting module 20 extracts the target MM page, the MM page selecting module 22 traverses the MMs originally saved by the mobile terminal user; the existed MMs are saved in the file system of the mobile terminal by classification, such as sports, current affairs and/or weather forecast; the saving categories are generally the title contents of various MMs and are saved in the fields of the MMs as MM headers; the MM page selecting module 22 analysis the MM headers of the MMs and obtain all the saving categories of the existed MMs ; and all the saving categories are displayed to the mobile terminal user in a list form to prompt the mobile terminal user to select or create a saving category. After the selection or creation by the mobile terminal user, the MM page selecting module 22 records the saving category selected or created by the mobile terminal user.

When the mobile terminal user selects an existing saving category, the selecting convergence sub-module 212 re-edits the target MM page in the temporary folder of the mobile terminal and the MM in the saving category recorded by the MM page selecting module 22 as a new MM, which includes:
firstly, extracting the parameters including the corresponding paths of the resource files and playing time of the MMs in the saving category selected by the mobile terminal user from the file system of the mobile terminal into a temporary list; then, saving the parameters including the corresponding paths of the resource files and playing time of the target MM page extracted by the MM page extracting module 20 into the temporary list, through inserting the parameters to be behind the parameters including the corresponding paths of the resource files and playing time of the MMs in the saving category selected by the mobile terminal user; and finally, recoding the target MM page data in the temporary folder of the mobile terminal and the originally existed MM data in the saving category selected by the mobile terminal user according to the parameters including the paths of the resource files and playing time in the upgraded temporary list, and then saving the recoded MM into the file system of the mobile terminal.

The abovementioned process is called the edition of the MM to generate a new MM; the saving category selected by the mobile terminal user is the MM header of the new MM for completing the convergence of the MM page. If the saving category required by the mobile terminal user does not exist in the existing saving categories, for example, the title contents of the MM page that the mobile terminal user needs to save is entertainments, but only sports, current affairs and weather forecast are in the existing saving categories of the MMs of the mobile terminal, so the mobile terminal user may create an entertainment saving category; the creating convergence sub-module 213 establishes the target MM page in the temporary folder of the mobile terminal as a MM of a new category according to the new saving category recorded by the MM page selecting module 22; and the new saving category is taken as the MM header of the MM, for completing the convergence of the MM page.

By using the mobile terminal, a mobile terminal user can only save the MM page he/she likes by classification in the limited storage space of the mobile terminal.

What described above are only preferred embodiments of the present invention, and not intended to limit the patent scope of the disclosure; and all the changes of the equivalent structure or equivalent flow made by using the description and drawings of the disclosure, or directly or indirectly application to other related technical fields are for the same reason included in the patent protection scope of the disclosure.

## Claims

1. A Multimedia Message, MM, saving method, **characterized in that** comprising:
extracting a target MM page from a piece of news received by a mobile terminal and copying the target MM page to a temporary folder of the mobile terminal (S101);
traversing MMs existed in the mobile terminal to obtain saving categories of the existed MMs; and displaying all the saving categories in a list form;
obtaining a saving category of the target MM page (S102) from the list or creating a saving category of the target MM page;
editing the target MM page in the temporary folder of the mobile terminal as a MM in the saving category; and
saving the edited MM (S103).

2. The MM saving method according to claim 1, further comprising:
before the target MM page is extracted to the temporary folder of the mobile terminal,
clearing the temporary folder of the mobile terminal.

3. The MM saving method according to claim 1 or 2, wherein the saving category is an existing saving category or a new saving category.

4. The MM saving method according to claim 3, wherein the saving category is identified by a title of the MM.

5. The MM saving method according to claim 1 or 2, wherein the editing the target MM page in the temporary folder of the mobile terminal as a MM in the saving category comprises:
when the saving category is an existing saving category, recoding the target MM page in the temporary folder of the mobile terminal and a MM in a selected saving category as a new MM; or
when the saving category is a new saving category, establishing the target MM page in the temporary folder of the mobile terminal as a MM in the new saving category.

6. A mobile terminal, **characterized in that** comprising:
a Multimedia Message, MM, page extracting module (20), configured to extract a target MM page from a piece of news received by the mobile terminal and to copy the target MM page to a temporary folder of the mobile terminal;
a MM page selecting module (22), configured to traverse MMs existed in the mobile terminal to obtain saving categories of the existed MMs, display all the saving categories in a list form and obtain a saving category of the target MM page from the list or create a saving category of the target MM page; and
a MM page convergence module (21), configured to edit the target MM page in the temporary folder of the mobile terminal as a MM in the saving category and to save the edited MM.

7. The mobile terminal according to claim 6, further comprising:
a clearing module (23), configured to clear the temporary folder of the mobile terminal when the temporary folder of the mobile terminal is not empty, before the MM page extracting module extracts the target MM page to the temporary folder of the mobile terminal.

8. The mobile terminal according to claim 6 or 7, wherein the saving category is an existing saving category or a new saving category.

9. The mobile terminal according to claim 8, wherein the saving category is identified by a title of the MM.

10. The mobile terminal according to claim 6 or 7, the MM page convergence module (21) comprises:
a selecting convergence sub-module, configured to recode the target MM page in the temporary folder of the mobile terminal and a MM in a selected saving category as a new MM, when the saving category is an existing saving category; or
a creating convergence sub-module, configured to establish the target MM page in the temporary folder of the mobile terminal as a MM in the new saving category, when the saving category is a new saving category.

## Patentansprüche

1. Multimedianachrichten, MM, Speicherverfahren, **dadurch gekennzeichnet, dass** es umfasst:
Extrahieren einer Ziel-MM-Seite aus einem Nachrichtenstück, das von einem mobilen Endgerät empfangen wurde, und Kopieren der Ziel-MM-Seite in einen temporären Ordner des mobilen Endgeräts (S101);
Traversieren von MMs, die im mobilen Endgerät vorhanden waren, um Speicherkategorien der vorhandenen MMS zu erhalten; und Anzeigen aller Speicherkategorien in Listenform;
Erhalten einer Speicherkategorie der Ziel-MM-Seite (S102) aus der Liste oder Erstellen einer Speicherkategorie der Ziel-MM-Seite;
Bearbeiten der Ziel-MM-Seite im temporären Ordner des mobilen Endgeräts als MM in der Speicherkategorie; und
Speichern der bearbeiteten MM (S103).

2. MM-Speicherverfahren nach Anspruch 1, das darüber hinaus umfasst:
Leeren des temporären Ordners des mobilen Endgeräts, bevor die Ziel-MM-Seite in den temporären Ordner des mobilen Endgeräts extrahiert wird.

3. MM-Speicherverfahren nach Anspruch 1 oder 2, wobei die Speicherkategorie eine vorhandene Speicherkategorie oder eine neue Speicherkategorie ist.

4. MM-Speicherverfahren nach Anspruch 3, wobei die Speicherkategorie durch einen Titel der MM identifiziert ist.

5. MM-Speicherverfahren nach Anspruch 1 oder 2, wobei das Bearbeiten der Ziel-MM-Seite im temporären Ordner des mobilen Endgeräts als MM in der Speicherkategorie umfasst:
wenn die Speicherkategorie eine vorhandene Speicherkategorie ist, Rekodieren der Ziel-MM-Seite im temporären Ordner des mobilen Endgeräts und einer MM in einer ausgewählten Speicherkategorie als neue MM; oder
wenn die Speicherkategorie eine neue Speicherkategorie ist, Einrichten der Ziel-MM-Seite im temporären Ordner des mobilen Endgeräts als MM in der neuen Speicherkategorie.

6. Mobiles Endgerät, **dadurch gekennzeichnet, dass** es umfasst:
ein Multimedianachrichten(MM)-Seiten-Extraktionsmodul (20), das so konfiguriert ist, dass es eine Ziel-MM-Seite aus einem Nachrichtenstück extrahiert, das vom mobilen Endgerät empfangen wurde, und die Ziel-MM-Seite in einem temporären Ordner des mobilen Endgerät kopiert;
ein MM-Seiten-Auswahlmodul (22), das so konfiguriert ist, dass es im mobilen Endgerät vorhandene MMs traversiert, um Speicherkategorien der vorhandenen MMs zu erhalten, es all die Speicherkategorien in Listenform anzeigt und es eine Speicherkategorie der Ziel-MM-Seite aus der Liste erhält oder eine Speicherkategorie der Ziel-MM-Seite erstellt; und
ein MM-Seiten-Konvergenzmodul (21), das so konfiguriert ist, dass es die Ziel-MM-Seite im temporären Ordner des mobilen Endgeräts als MM in der Speicherkategorie bearbeitet und die bearbeitete MM speichert.

7. Mobiles Endgerät nach Anspruch 6, das darüber hinaus umfasst:
ein Leerungsmodul (23), das so konfiguriert ist, dass es den temporären Ordner des mobilen Endgeräts leert, wenn der temporäre Ordner des mobilen Endgeräts nicht leer ist, bevor das MM-Seiten-Extraktionsmodul die Ziel-MM-Seite in den temporären Ordner des mobilen Endgeräts extrahiert.

8. Mobiles Endgerät nach Anspruch 6 oder 7, wobei die Speicherkategorie eine vorhandene Speicherkategorie oder eine neue Speicherkategorie ist.

9. Mobiles Endgerät nach Anspruch 8, wobei die Speicherkategorie durch einen Titel der MM identifiziert ist.

10. Mobiles Endgerät nach Anspruch 6 oder 7, wobei das MM-Seiten-Konvergenzmodul (21) umfasst:
Auswählen eines Konvergenzuntermoduls, das so konfiguriert ist, dass es die Ziel-MM-Seite im temporären Ordner des mobilen Endgeräts und eine MM in einer ausgewählten Speicherkategorie als neue MM rekodiert, wenn die Speicherkategorie eine vorhandene Speicherkategorie ist; oder
Erstellen eines Konvergenzuntermoduls, das so konfiguriert ist, dass es die Ziel-MM-Seite im temporären Ordner des mobilen Endgeräts als eine MM in der neuen Speicherkategorie einrichtet, wenn die Speicherkategorie eine neue Kategorie ist.

## Revendications

1. Procédé de sauvegarde de message multimédia, MM, **caractérisé en ce qu'**il comporte les étapes ci-dessous consistant à :
extraire une page de message MM cible d'un élément d'information reçu par un terminal mobile, et copier la page de message MM cible dans un dossier temporaire du terminal mobile (S101) ;
parcourir des messages MM ayant existé dans le terminal mobile en vue d'obtenir des catégories de sauvegarde des messages MM ayant existé ; et afficher toutes les catégories de sauvegarde sur forme de liste ;
obtenir une catégorie de sauvegarde de la page de message MM cible (S102) à partir de la liste, ou créer une catégorie de sauvegarde de la page de message MM cible ;
modifier la page de message MM cible dans le dossier temporaire du terminal mobile en tant qu'un message MM dans la catégorie de sauvegarde ; et
sauvegarder le message MM modifié (S103).

2. Procédé de sauvegarde de message MM selon la revendication 1, comprenant en outre l'étape ci-dessous consistant à :
avant que la page de message MM cible ne soit extraite vers le dossier temporaire du terminal mobile, supprimer le dossier temporaire du terminal mobile.

3. Procédé de sauvegarde de message MM selon la revendication 1 ou 2, dans lequel la catégorie de sauvegarde est une catégorie de sauvegarde existante ou une nouvelle catégorie de sauvegarde.

4. Procédé de sauvegarde de message MM selon la revendication 3, dans lequel la catégorie de sauvegarde est identifiée par un titre du message MM.

5. Procédé de sauvegarde de message MM selon la revendication 1 ou 2, dans lequel la modification de la page de message MM cible dans le dossier temporaire du terminal mobile en tant qu'un message MM dans la catégorie de sauvegarde, comprend les étapes ci-dessous consistant à :
lorsque la catégorie de sauvegarde correspond à une catégorie de sauvegarde existante, coder à nouveau la page de message MM cible dans le dossier temporaire du terminal mobile et un message MM dans une catégorie de sauvegarde sélectionnée sous la forme d'un nouveau message MM ; ou
lorsque la catégorie de sauvegarde correspond à une nouvelle catégorie de sauvegarde, établir la page de message MM cible dans le dossier temporaire du terminal mobile en tant qu'un message MM dans la nouvelle catégorie de sauvegarde.

6. Terminal mobile, **caractérisé en ce qu'**il comporte :
un module d'extraction de page de message multimédia, MM, (20), configuré de manière à extraire une page de message MM cible d'un élément d'information reçu par le terminal mobile, et à copier la page de message MM cible dans un dossier temporaire du terminal mobile ;
un module de sélection de page de message MM (22), configuré de manière à parcourir des messages MM ayant existé dans le terminal mobile, en vue d'obtenir des catégories de sauvegarde des messages MM ayant existé, à afficher toutes les catégories de sauvegarde sous forme de liste, et à obtenir une catégorie de sauvegarde de la page de message MM cible à partir de la liste, ou à créer une catégorie de sauvegarde de la page de message MM cible ; et
un module de convergence de page de message MM (21), configuré de manière à modifier la page de message MM cible dans le dossier temporaire du terminal mobile en tant qu'un message MM dans la catégorie de sauvegarde, et à sauvegarder le message MM modifié.

7. Terminal mobile selon la revendication 6, comprenant en outre :
un module de suppression (23) configuré de manière à supprimer le dossier temporaire du terminal mobile lorsque le dossier temporaire du terminal mobile n'est pas vide, avant que le module d'extraction de page de message MM n'extraie la page de message MM cible vers le dossier temporaire du terminal mobile.

8. Terminal mobile selon la revendication 6 ou 7, dans lequel la catégorie de sauvegarde correspond à une catégorie de sauvegarde existante ou à une nouvelle catégorie de sauvegarde.

9. Terminal mobile selon la revendication 8, dans lequel la catégorie de sauvegarde est identifiée par un titre du message MM.

10. Terminal mobile selon la revendication 6 ou 7, dans lequel le module de convergence de page de message MM (21) comprend :
un sous-module de convergence de sélection, configuré de manière à coder à nouveau la page de message MM cible dans le dossier temporaire du terminal mobile et un message MM dans une catégorie de sauvegarde sélectionnée en tant qu'un nouveau message MM, lorsque la catégorie de sauvegarde correspond à une catégorie de sauvegarde existante ; ou
un sous-module de convergence de création, configuré de manière à établir la page de message MM cible dans le dossier temporaire du terminal mobile en tant qu'un message MM dans la nouvelle catégorie de sauvegarde, lorsque la catégorie de sauvegarde correspond à une nouvelle catégorie de sauvegarde.
